# EUROPEAN PATENT APPLICATION

(11) **EP 2 216 868 A1**
(43) Date of publication of application: **11.08.2010**
(21) Application number: 09152151.8
(22) Date of filing: 05.02.2009
(51) Int. Cl.: H02H 3/28

(54) **Measurement device adapted for detecting an arc discharge and method for detecting an arc discharge**

(71) Applicant: ABB Technology AG, 8050 Zürich (CH)
(72) Inventor: Stanek, Michael, CH-5412, Gebenstorf (CH)
(74) Representative: ABB Patent Attorneys

(57) **Abstract**

The present invention concerns a measurement device adapted for detecting an arc discharge (10) in at least one error detection region (3b) of an insulated conductor arrangement (1), the insulated conductor arrangement having a conductor (7) surrounded by an insulating medium and a conducting enclosure (9), the insulating medium being disposed between the conductor and the enclosure, the error detection region being delimited by at least two conductor sections of the conductor; the measurement device comprises at least one leakage current determining unit adapted for determining a leakage current in the at least one error detection region; and a processing unit operatively connected to the leakage current determining unit and adapted for determining an arc discharge within the gas-insulated conductor on the basis of the determined leakage current. Further, the present invention relates to a method for detecting an arc discharge (10) in at least one error detection region (3b) of an insulated conductor arrangement (1), the insulated conductor arrangement having a conductor (7) surrounded by an insulating medium and a conducting enclosure (9), the insulating medium being disposed between the conductor and the enclosure, the error detection region being delimited by at least two conductor sections of the conductor; the method comprises: a) determining a leakage current in the at least one error detection region on the basis of Kirchhoffs current law; and b) determining an arc discharge within the gas-insulated conductor on the basis of the determined leakage current.

## Description

The present disclosure generally relates to measurement device adapted for detecting an arc discharge in an insulated conductor arrangement, in particular a gas-insulated conductor. Further, the present invention relates to an insulated conductor arrangement comprising said measurement device. Finally, the present invention relates to a method for detecting an arc discharge in an insulated conductor arrangement.

Gas-insulated switch gears or gas-insulated conductors often have a large number of gas compartments, which are segregated from each other by barrier insulators. Following an arc fault, for example an electrical arc between a high voltage conductor in the gas-insulated conductor and a grounded enclosure around the high-voltage conductor, the faulted compartment should be identified and repaired as quickly as possible. For the purpose of identification, dedicated arc detection systems are used. For example, DE 35 35 544 Al discloses a device for localizing an internal fault in a gas insulated conductor comprising an electrode for detecting the change of the voltage of the conductor.

US 5,986,860 discloses a zone arc fault detection using a differential current detector or a di/dt based detector.

Further, EP 0 249 815 B1 discloses a device for detecting interfering arcs in a darkened first internal space, containing at least one electric switch, of an electric system comprising at least a first optical sensor for detecting the light pulses of arcs in the first internal space.

State of the art systems use the optical emissions of an arc, as described for example in EP 0 249 815 B1, to identify the faulty compartment. Typically, this method responds also to switching arcs. To avoid false alarms, the arc detection system has to be disabled during switching operations, so that arc faults occurring during that time can not be detected.

Thus, it is an object of the invention to provide a measurement device for detecting an arc discharge in an insulated conductor arrangement or in a gas-insulated switchgear that determines continuously if an arc discharge has occurred in the insulated conductor arrangement or in the gas-insulated switchgear. A further object is to provide a simple and reliable system for detecting an arc-discharge in an insulated conductor arrangement or in a gas-insulated switchgear.

In view of the above, a measurement device detected for detecting an arc discharge in a - insulated conductor arrangement is provided.

In view of the above, a measurement device adapted for detecting an arc discharge in at least one error detection region of an insulated conductor arrangement is provided, the insulated conductor arrangement having a conductor surrounded by an insulating medium and a conducting enclosure, the insulating medium being disposed between the conductor and the enclosure, wherein the error detection region being delimited by at least two conductor sections of the conductor; the measurement device comprises at least one leakage current determining unit adapted for determining a leakage current in the at least one error detection region; and a processing unit operatively connected to the leakage current determining unit and adapted for determining an arc discharge within the insulated conductor arrangement on the basis of the determined leakage current.

In a typical embodiment, the insulating medium is a gas, in particular SF6, and the insulated conductor arrangement is a gas-insulated conductor.

In a further typical embodiments, the insulating medium is an insulating layer disposed between the conductor and the enclosure. The insulating layer is in particular an oil or a solid material.

In a further typical embodiment, the insulating medium is a vacuum.

In a further embodiment, which may be combined with other embodiments disclosed herein, the enclosure is grounded.

In a typical embodiment, the insulated conductor is a gas insulated switch gear (GIS), a gas insulated transmission line (GIL), or a cable. In a typical embodiment, the conducting enclosure is grounded and/or a screen.

In a further embodiment, which may be combined with other embodiments disclosed herein, the conductor and enclosure are substantially concentric.

In a typical embodiment, the leakage current determining unit is adapted to be operatively connected to at least two current sensors for measuring the currents flowing through the at least two conductor sections, and is further adapted for comparing the currents flowing into and out of the error detection region.

In a further embodiment, which may be combined with other embodiments disclosed herein, the leakage current determining unit is adapted for determining a sum of the measured currents flowing in the conductor sections, wherein the currents are measured in direction of the error detection region.

In a typical embodiment, the leakage current determining unit is adapted for determining a sum of the measured currents flowing in the conductor sections, wherein the currents are measured away from the error detection region.

The processing unit may be in an embodiment, a computer implemented or electronic processing unit. In a further embodiment, the processing unit is an electro-mechanical or electro-magnetic processing unit.

In a typical embodiment, the leakage current is a current that flows at least partially through the enclosure.

In a further embodiment, which may be combined with other embodiments disclosed herein, the enclosure of the (gas-) insulated conductor is grounded. In another embodiment, the enclosure is conducting.

In a typical embodiment, the conductor is adapted to conduct a high voltage current, in particular a current of more than 100 Ampere.

In a typical embodiment, the distance between the first location and the second location is less than 1/10 of the wave length of the current flowing in the conductor. In a further embodiment, which may be combined with other embodiments disclosed herein, the measurements of the current sensors are performed substantially synchronized.

In a typical embodiment, the error detection region being delimited by two conductor sections of the conductor; the measurement device is adapted to be operatively connected to two current sensors for measuring in direction to the error detection region the currents flowing through the two conductor sections, or operatively connected to two current sensors for measuring in direction away from the error detection region the currents flowing through the two conductor sections.

In a typical embodiment, the error detection region being delimited by at least three conductor sections of the conductor.

In a further embodiment, which may be combined with other embodiments disclosed herein, the measurement device is adapted to be operatively connected to at least three current sensors for measuring in direction to the error detection region the currents flowing through the at least three conductor sections, or operatively connected to at least three current sensors for measuring in direction away from the error detection region the currents flowing through the at least three conductor sections.

In a typical embodiment, which may be combined with other embodiments disclosed herein, the number conductor sections delimiting the error detection region, corresponds to the number of current sensors for measuring the current in the conductor section, wherein in particular each current sensor measures a current in a respective conductor section.

In a further embodiment, which may be combined with other embodiments disclosed herein, at least one of the current sensors is a coil with at least one winding, in particular with an iron core.

In a typical embodiment the iron core and/or the winding surrounds the conductor of the insulated conductor arrangement.

In a further embodiment, which may be combined with other embodiments disclosed herein, at least one of the current sensors is a Rogowski coil.

A further embodiment, may be **characterized in that** at least one of the current sensors are provided as Hall sensors and/or wherein at least one of current sensors are provided as Faraday effect sensors.

Thus, the sensor may use a faraday effect optical fibre. The faraday effect is a rotation of the plane of polarization of a light beam proportional to the intensity of the component of the magnetic field in the direction of the beam of light. Typically, the magnetic field of a single conductor is proportional to the current in the conductor.

In a further embodiment, which may be combined with other embodiments disclosed herein, at least one of the current sensors, in particular all current sensors, are placed within the enclosure.

In a typical embodiment, the (gas-) insulated conductor has at least one gas, air, oil or vacuum compartment, the gas, air, oil or vacuum compartment being formed by the conductor, the enclosure, and in direction of the conductor by at least one barrier insulator.

In a typical embodiment, a gas, air, oil or vacuum compartment is formed by the conductor, the enclosure, and two barrier insulators at each end of the compartment in direction of the conductor.

In a further embodiment, at least one current sensor, in particular two current sensors, is or are disposed in or adjacent to the barrier insulator.

In a further embodiment, which may combined with other embodiments disclosed herein, at least one current sensor, in particular two current sensors, is or are disposed in an outer edge of the barrier insulator or in a fitting of the barrier insulator.

In a typical embodiment, at least one error detection region corresponds substantially to a gas, air, oil or vacuum compartment.

An embodiment may be **characterized in that** the insulated conductor arrangement comprises a plurality of gas, air, oil or vacuum compartments and a plurality of error detection regions, wherein the error detection regions correspond substantially to the gas, air, oil or vacuum compartments.

Typically, an embodiment may be **characterized in that** the insulated conductor arrangement comprises a plurality of error detection regions, wherein the processing unit is adapted for determining in which error detection region the arc discharge has been occurred.

In a typical embodiment, which may be combined with other embodiments disclosed herein, the processing unit may be adapted to provide a signal, where the arc-discharge has been occurred.

In a further embodiment, the leakage current determining unit is adapted to calculate the sum of the currents in the conductor sections measured in direction of the error detection region or to calculate the sum of the currents in the conductor sections measured in direction away from the error detection region.

Though, the currents measured in the respective conductor sections are compared in the leakage current determining unit by calculating a sum, such that the calculated sum corresponds to the leakage current.

Thus, the sum according to Kirchhoff's current law is calculated, that all currents measured in direction to a specific node or measured in direction away from a specific node is zero.

In another embodiment, the leakage current determining unit may also comprise a subtraction device for subtracting a first measured current at a first conductor section from a second measured current at a second conductor section. Though, the use of a sum or a subtraction device depends on the direction in which the currents are measured and how the currents are connected to the leakage current determining unit.

In a typical embodiment, which may be combined with other embodiments disclosed herein, the leakage current determining unit includes an operational amplifier for comparing the currents measured in the respective conductor sections. For example, when an operational amplifier is used to add the currents of a first sensor and a second sensor, the signal of one of the sensors is inverted, or measured in the inverse direction.

In another embodiment, which may be combined with other embodiments disclosed herein, the leakage current determining unit comprises a solenoid including a coil for each current sensor, wherein the coils are connected to the current sensors, such that the resulting magnetic field is proportional to the leakage current.

Typically, a normal operation is an operation where the current flow through the insulated conductor arrangement, in particular through the gas-insulated conductor or the gas-insulated switchgear, substantially without a loss, e.g. due to an arc discharge, in particular such that Kirchhoff's current law is substantially fulfilled for the error detection region. Typically, in normal operation small losses occur, e.g. due to capacitive currents. Therefore, an adapted threshold has to be determined, when a leakage current exceeds the usual small losses.

In a typical embodiment, which may be combined with other embodiments disclosed herein, the leakage current determining unit is formed as an electro-mechanical current sum determining or detection unit comprising a coil for each current sensor of a respective error detecting region and a movable armature in the core of the coils, such that the current sum is converted in a longitudinal movement of the armature.

In a further embodiment, which may be combined with other embodiments disclosed herein, the leakage current determining unit is provided as a current transformer comprising a coil for each current sensor of a respective error detecting region as a primary windings and a secondary winding, wherein the coils for each current sensor are arranged such that the output current of the secondary winding is proportional to the sum of the measured currents.

A typical embodiment may be **characterized in that** the processing unit is adapted to compare the leakage current determined by the leakage current determining unit with a predetermined value, and in particular to provide an alert signal if the leakage current exceeds the predetermined threshold value.

In a typical embodiment, the processing unit may compare mechanically or electromechanically the leakage current determined by the leakage current determining unit with a predetermined threshold value.

In a typical embodiment, the alert signal is an optical alert. In a further embodiment, the alert signal is an acoustical alert.

In an embodiment with a plurality of error detection regions, the alert signal may indicate in which error detection region an error has been detected.

In a further embodiment, the processing unit may compare electronically the leakage current determined by the leakage current determining unit with a predetermined threshold value.

In a typical embodiment, the gas insulated conductor is a gas-insulated switchgear.

According to a further object, an insulated conductor arrangement comprising a measurement device according the invention is provided.

According to another aspect a method for detecting an arc discharge in at least one error detection region of an insulated conductor arrangement is provided, the insulated conductor arrangement having a conductor surrounded by an insulating medium and an enclosure, the error detection region being delimited by at least two conductor sections of the conductor; the method comprises: a) determining a leakage current in the at least one error detection region; and b) determining an arc discharge within the insulated conductor arrangement on the basis of the determined leakage current.

In a typical embodiment step a) comprises a1) measuring the currents flowing through the at least two conductor sections, and a2) comparing the currents flowing into and out of the error detection region.

In a typical embodiment, the step a2) may be performed in calculating a sum of the currents flowing into the error detection region or in calculating a sum of the currents out of the error detection region.

In a further embodiment, which may be combined with other embodiments disclosed herein, step b) may comprise: comparing the leakage current with a predetermined value, wherein in particular the method further comprises: providing an alert signal if the leakage current exceeds a predetermined threshold value.

In a typical embodiment, the error detection region being delimited by two conductor sections of the conductor; the method comprises measuring in direction to the error detection region the currents flowing through the two conductor sections, or measuring in direction away from the error detection region the currents flowing through the two conductor sections.

In a further embodiment, which may combined with other embodiments disclosed herein, the error detection region being delimited by at least three conductor sections of the conductor, wherein the method comprises measuring in direction to the error detection region the currents flowing through the at least three conductor sections, or measuring in direction away from the error detection region the currents flowing through the at least three conductor sections.

In a typical embodiment, which may be combined with other embodiments disclosed herein, the number conductor sections delimiting the error detection region, corresponds to the number of currents measured in the conductor sections, wherein in particular in each conductor section the respective current is measured. For example, in case the error detection region is delimited by the conductor sections, the currents in each of the three conductor sections are measured.

Thus, the present invention is based on Kirchhoff's current law, which states that the sum of currents flowing toward any point or node in an electrical network is equal to the sum of currents flowing away from that point. That means, if all currents of conductors that are connected at a node are measured in direction of the node, that the sum of all currents must be zero. In an insulated conductor arrangement, in particular in a gas-insulated switchgear or a gas-insulated conductor, this means that without arc fault, the same current will flow through the high-voltage conductor in all compartments of branch. In case, that an arc fault occurs, the arc fault will drain the current to earth, as, typically, the enclosure of the insulated conductor arrangement, in particular if the insulated conductor arrangement is a gas-insulated switchgear, is grounded, so that the fault current is seen at the entrance but not at the exit of the affected compartment.

Further exemplary embodiments are according to the dependent claims, the description and the accompanying drawings.

A full and enabling disclosure, including the best mode thereof, to one of ordinary skill in the art is set forth more particularly in the remainder of the specification including reference to the accompanying drawings wherein:
Fig. 1 shows a gas-insulated conductor;
Fig. 2 shows current signals of current sensors;
Fig. 3 shows a first embodiment of a current sensor;
Fig. 4 shows a further embodiment of a current sensor;
Fig. 5 shows an embodiment of a local electro-mechanical detection unit;
Fig. 6 shows a further embodiment of an electro-magnetic detection unit;
Fig. 7 shows an embodiment of an electronic detection and display unit; and
Fig. 8 shows an embodiment of gas-insulated switchgear;
Fig. 9 is a schematic drawing of an embodiment of a measurement device adapted to detect an arc fault in the gas-insulated switchgear of Fig. 8;
Fig. 10 is a schematic drawing of an embodiment of a gas-insulated switchgear;
Fig. 11 is a schematic drawing of an embodiment of a measurement device adapted to detect an arc fault in the gas-insulated switchgear of Fig. 10;
Fig. 12 shows a schematic flowchart of a method for detecting an arc discharge in an gas-insulated switchgear or a gas-insulated conductor.

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield yet a further embodiment. It is intended that the present disclosure includes such modifications and variations.

A number of embodiments will be explained below. In this case, identical structural features are identified by identical reference symbols in the drawings. The structures shown in the drawings are not depicted true to scale but rather serve only for the better understanding of the embodiments.

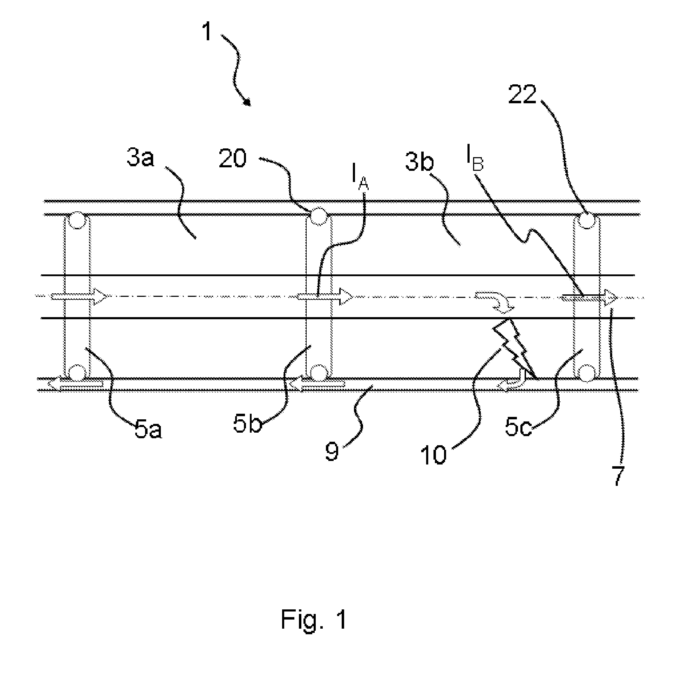

Fig. 1 shows a section of an insulated conductor arrangement embodied as a gas-insulated switchgear or a gas-insulated conductor 1. The gas-insulated switchgear or gas-insulated conductor 1 has a large number of gas compartments 3a, 3b, which are separated from each other by barrier insulators 5a, 5b, 5c. The gas-insulated conductor 1 has a high-voltage conductor 7 for a transmission of a high-voltage current. The high-voltage conductor 7 is surrounded by a grounded enclosure 9. In a typical embodiment, the space between the high-voltage conductor 7 and the enclosure 9 is filled with an insulating gas, for example SF6, which is one example for an insulating medium. In different embodiments of the insulated conductor arrangement the space between the high-voltage conductor 7 and the enclosure 9 can be filled with an other insulating medium such as oil, an insulating layer such as a solid insulating medium, or a vacuum. If an arc fault occurs, for example an electrical arc 10 between the high-voltage conductor 7 and the grounded enclosure 9, the faulted compartment should be identified and repaired as quickly as possible.

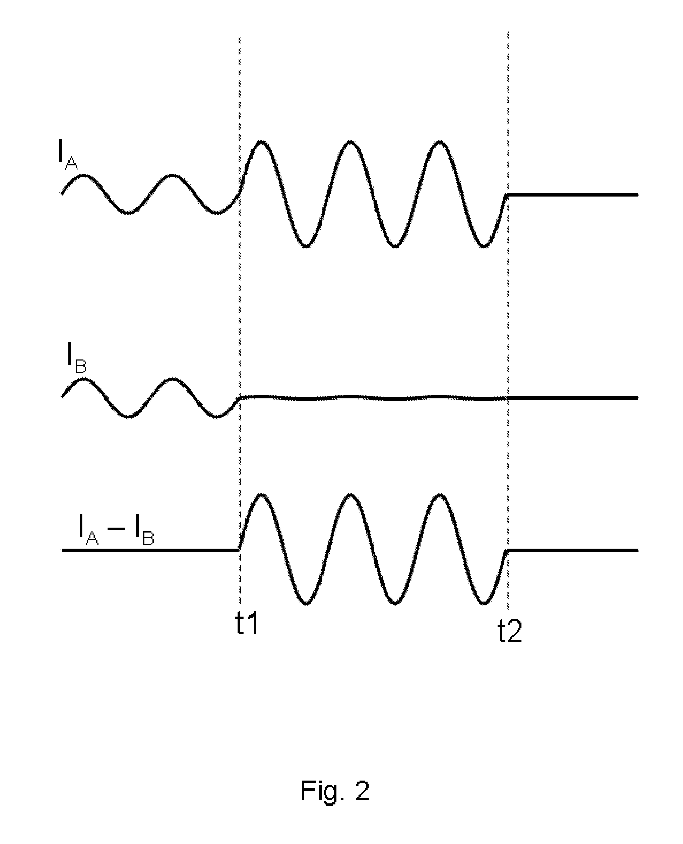

A first current sensor 20 and a second current sensor 22 are arranged in or at a first and second barrier insulator 5b, 5c respectively. Thus, an easy identification of the faulted compartment is possible. This will be explained in more detail with respect to Fig. 2 below. Between the first current sensor 20 and the second current sensor 22 an error detection region is disposed. In the example of Fig. 1, the error detection region corresponds substantially to the gas compartment 3b that is delimited in direction of the high-voltage conductor by the first barrier insulators 5b on a first side and by the second barrier insulator 5c on a second side.

In a further embodiment, the error detection region may be smaller or larger than a gas compartment 3b. In fact, the dimension of the error detection region depends on the arrangement of the first current sensor 20 and the second current sensor 22. Typically, the error detection region extends in longitudinal direction of the high-current conductor 7.

In Fig. 2 the current signals of the first current sensor 20 and the second current sensor 22 are shown. The first current sensor 20 measures the current of the high-voltage conductor 7 at a first location, namely at the first barrier insulator 5b. The second current detector detects the current of the high-voltage conductor 7 at the second location, namely at the second barrier insulator 5c. As already explained here above, the first and second locations are spaced apart from each other. In a typical embodiment, the distance between the first and the second location is selected such that the current at the first location is substantially the same as the current at the second location. This depends largely on the wave length of an alternating current. Thus, in an embodiment, which may be combined with other embodiments disclosed herein, the distance between the first and the second location is in a typical embodiment less than ¹/₁₀ of the wave length of the high-voltage current.

In the upper part of Fig. 2, the current I_{A} is shown that is measured by the first current sensor 20. The current labelled I_{B} is measured by the second current sensor 22. During normal operation the current through the first barrier insulator 5b measured with current sensor 20, labelled I_{A}, is substantially equal to the current through the second barrier insulator 5c with the second current sensor 22, I_{B}. Thus, if a current difference between the current at the first location measured by the first current sensor 20 and the current measured at a second location by the second current sensor 22 is calculated, the difference is substantially zero. This is shown in the bottom line of Fig. 2, that shows the difference between the current measured at the first location and the current measured at the second location. In the example of Fig. 2, at the time t1 an internal arc 10 ignites, such that the fault current is drained to the ground. As a fault current occurs, the high voltage conductor is interrupted at the time t2.

As it can be seen from Fig. 2, between the time t1 and t2, the current difference I_{A} - I_{B} is non-zero, which indicates that the arc fault occurred between the current sensors 20 and 22. Typically, the fault current has a higher amplitude than the regular load current, such that the detection may be implemented in an embodiment by a simple thresholds supervision of the differential current, in particular if the current are measured in the same direction.

In an embodiment, which may be combined with other embodiments disclosed herein, the current sensors are located inside the enclosure. Thus, the current sensors are disposed inside the ground current return path of the enclosure 9, so as the measure only the current in the high-voltage conductor 7.

The same principle may be applied in further embodiments also to junctions in the switchgear, where the current take more than one regular path, which we will explain in more detail below. Typically, applying the principal that the sum of all currents entering an electrical node is always zero, the faulty compartment is also easily identified.

Thus, in a typical embodiment the application of differential current detection is used to identify a switchgear section, which is, in an embodiment, a gas compartment, where an arc fault has occurred.

An embodiment of an fault arc detection system may comprise current sensors, one or more detection units to identify and indicate the faulty gas compartment, and a signal transmission from the sensors to the detection unit.

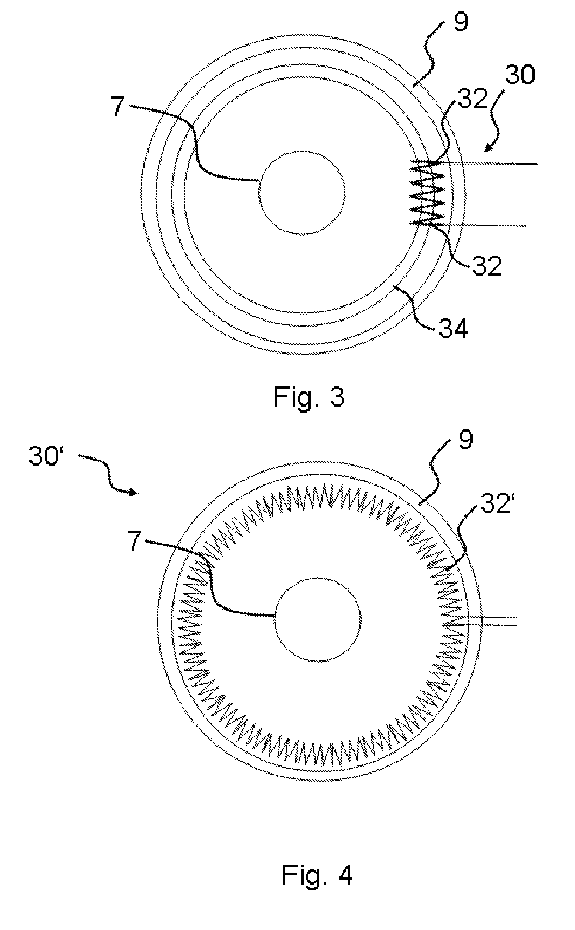

In a typical embodiment, a coil of one or more windings of insulated wire in the outer edge of each barrier insulator or its fitting may be used as a current sensor. This coil may be extended over a limited space or all the way around the circumference. This will be explained with reference to Figs. 3 and 4.

Fig. 3 shows a cross section through a gas-insulated conductor or a gas-insulated switchgear. A current sensor 30 is disposed within the enclosure 9, such that only the current of the high-voltage conductor 7 is detected. The current sensor 30 is located in a typical embodiment in an outer edge of a barrier insulator or its fitting. In other embodiments, the current sensor may be located at other positions for measuring the current in the high-voltage conductor 7.

The current sensor 30 comprises one or more windings 32 of an insulated wire. In an embodiment, the current sensor 30 may have an iron core 34. The iron core may extend in an embodiment within the coils 32. In a further embodiment, the iron core may extend around the high-voltage conductor 7, in particular within a barrier insulator 5a, 5b, 5c.

In a further embodiment of the current sensor 30', the coil may have multiple windings 32' as it is shown in Fig. 4. The windings may extend in this embodiment completely around the high-voltage conductor 7, in particular at the circumference of a barrier insulator. In an typical embodiment, the coil is therefore placed adjacent to the enclosure 9 around the high-voltage conductor 7. The embodiment shown in Fig. 4 may have in a further embodiment an iron core (not shown). In a typical embodiment, the current sensor of Fig. 4 may be a Rogowski coil.

The coil may be connected to a leakage current determining unit directly by suitable wires. In another embodiment, the coil may drive an optical emitter such as an LED or a small signal processing unit that is directly installed on or at the current sensor 30, 30', for preprocessing of the coil signal. The pre-processed coil signal is transmitted to the leakage current determining unit.

In a further embodiment, a sensor for the detection of the magnetic field generated by the current flowing in the high-voltage conductor 7 may be used. Thus, in an embodiment, a Hall-effect sensor may be used, which is connected to an electronic processing device located either directly on the sensor or in a central processing unit. The electronic processing device may convert the sent magnetic field to the current flowing in the high-voltage conductor 7.

In a further embodiment, it is possible to detect the magnetic field with an Faraday-effect optical fibre. Such an embodiment has the advantage of optimal electrical insulation and electromagnetic compatibility.

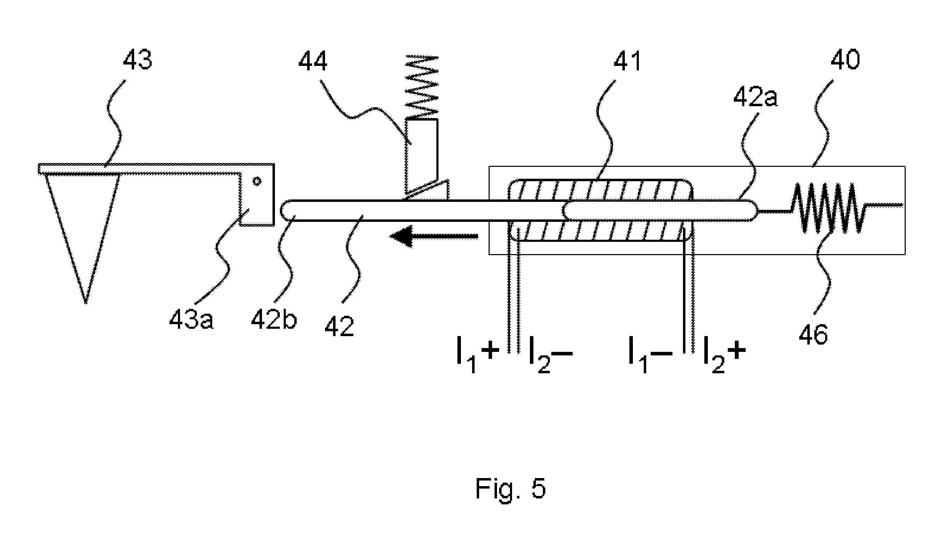

Fig. 5 shows an embodiment of an electro-mechanical detection unit 40. The electro-mechanical detection unit 40 shown in Fig. 5 comprises a solenoid 41. The electro-mechanical device or detection unit 40 may be located, in a typical embodiment, on the gas-insulated conductor or the gas-insulated switchgear. In a typical embodiment, it may be disposed on the outside of a supervised gas compartment by the electro-mechanical detection unit 40. The electro-mechanical detection unit 40 has a solenoid 41 with two or more coils of the same number of windings. Each coil is connected to the signal of one current sensor. For example, in an embodiment the electro-mechanical detection unit may comprise a first and a second coil which are respectively connected to a first and second current detector, for example the current detectors 20, 22 shown in Fig. 1. In an embodiment where the high voltage conductor of the gas-insulated conductor or the gas-insulated switchgear is a node comprising three or more branches, wherein each branch comprises a conductor section delimiting the error detection region, the solenoid may comprise three or more coils 41 of the same number of windings. Typically, the number of coils corresponds to the number of branches, and thus to the number of conductor sections.

The arrangement of the coils in the solenoid 41 and the electrical connections are made in such a way such that the resulting magnetic force is zero as long as a Kirchhoff current law is fulfilled in the gas compartment between the first and second current sensors. Within the solenoid an armature 42 is moveably disposed, such that it may move in the axial direction of the solenoid 41. The armature has a first end 42a and a second end 42b. Further, the electro-mechanical detection unit comprises a reset spring connected at a first end to a fixed housing of the detection unit and at a second end to the first end 42a of the armature 42. The armature has a first position when the resulting magnetic force is zero, and moves to a second position in case of an imbalance in the currents flowing though the coils. In Fig. 5, the armature 42 moves to a second position to the left side. Thus, the solenoid 41 is a leakage current determining unit which is operatively connected to the current sensors. The resulting magnetic flux in the solenoid is proportional to the sum of the currents measured by the sensors. Typically, the distance the armature 42 moves is proportional to the magnetic flux in the solenoid. Thus, the sum of the currents is converted to a displacement.

Typically, the electro-mechanical detection unit further comprises a display element, for example a pivoting flagstaff which may pivot from a horizontal position, shown in Fig. 5 to a substantially vertical position. Thus, in the electro-mechanical detection unit 40, a processing unit is provided by the armature 42 and the flagstaff 43 mechanically connected to the armature 42.

In an embodiment, the pivoting flagstaff is disposed, such that when the armature moves from its first position to the second position, the second end 42b of the armature 42 hits against a stop 43a such that the flagstaff 43 moves from its horizontal position to its vertical position.

In an embodiment, where a reset spring 46 is used, the force of the reset spring 46 is adapted, such that a current imbalance resulting from an arc fault may move the armature 42 from the first position to the second position.

In a typical embodiment, as it is shown in Fig. 2, the fault current is interrupted at an instant t2. For that reason, as the resulting magnetic force of the solenoid 41 of the electro-mechanical detection unit 40 shown in Fig. 5 would be zero, the reset spring would retract the armature 42 from the second position back to the first position. To prevent this automatic retraction, before the gas-insulated conductor or the gas-insulated switchgear is repaired, the flagstaff 43 should be retained in the vertical position as long as the gas-insulated conductor is not repaired. For that reason, in an embodiment, a latch 44 is provided, for retaining the armature in the second position, and thus the flagstaff 43 in the vertical position, if an imbalance of current has accessed a certain value. After the repair of the gas-insulated conductor, the latch 44 may be retracted manually, such that the armature moves back from the second position to the first position, e.g. by the force of the reset spring 46. Then, the flagstaff 43 falls back from the vertical position to the horizontal position, or may be alternatively moved manually from the vertical position to the horizontal position.

In a further embodiment, no reset spring and a latch is provided, such that the armature 42 would only move from the first position to the second position and stop at the second position. In that case, after repair of the gas-insulated conductor, the armature 42 has to be pushed manually back from the second position to the first position.

In a further embodiment, a latch (not shown) is provided to retain the flagstaff 43 in the upright or vertical position. Then, if the fault current is interrupted at an instant t2, the armature moves from the second position back to the first position, and the flagstaff 43 is retained in the upright position until it is manually reset from the upright position to the horizontal position by retracting the latch.

In Fig. 5, with the electro-mechanical detection unit 40, a processing unit is provided by the armature 42, the flagstaff 43, the latch 44 and the reset spring 46.

The arrangement of the coils and electrical connection is made in such a way that the resulting magnetic force is zero as long as the Kirchhoff current law is fulfilled in the gas compartment between the sensors. In case of an imbalance in currents, the resulting magnetic force will move the armature 42, which in turn operates a display element 43 indicate the faulty gas compartment. The armature or display element must latch for continuous indication until manual reset.

The particular arrangement in Fig. 5 gives as one possible arrangement two interwoven coils that are connected in anti-parallel.

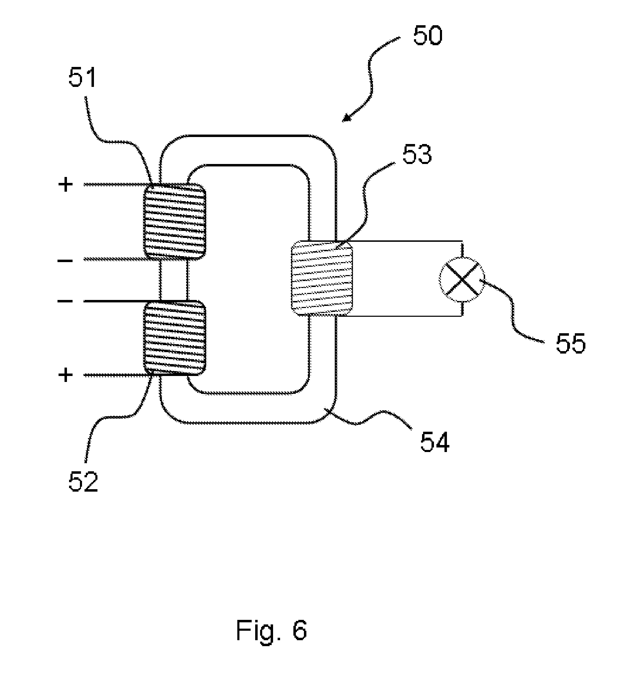

Fig. 6 shows an embodiment of an electro-magnetic detection unit. The electro-magnetic detection unit 50 comprises two input coils 51 and 52. In a further embodiment, the electro-magnetic detection unit may comprise further input coils. Generally, the electro-magnetic detection unit of Fig. 6 is similar to a current transformer having two or more primary windings 51, 52 and a secondary winding 53 which are arranged on a common magnetic core 54. Each input coil or primary winding takes the signal from one sensor. Each primary winding 51, 52 has substantially the same numbers of windings. Further, the electrical connections are made in such way, that the resulting magnetic flux in the core is zero, as long as the Kirchhoff current law is fulfilled in the error detection region or the gas compartment between the sensors. Thus, by the magnetic core 54 and the primary windings 51, 52 a leakage current determining unit is provided. In case of an imbalance of the currents, the resulting magnetic flux will induce a current in the secondary winding 53, which in turn can be used in a local or central indication unit. In an embodiment, the indication unit may be a lamp 55.

Thus, the current in the secondary winding 53 is proportional to the sum of the measured currents and therefore a processing unit is provided by the magnetic core 54 and the secondary winding 53.

In a further embodiment, the secondary winding 53 may be connected via a relay to an indication unit with a lamp. The relay may comprise a latch to be reset manually, such that after an interruption of the current, the lamp will still indicate that an arc discharge has occurred in the gas-insulated conductor. In a further embodiment, a flip-flop or other logic units may be used for providing a continuous signalling after the current has been interrupted in the gas-insulated conductor, in particular until the gas-insulated conductor or gas-insulated switchgear has been repaired.

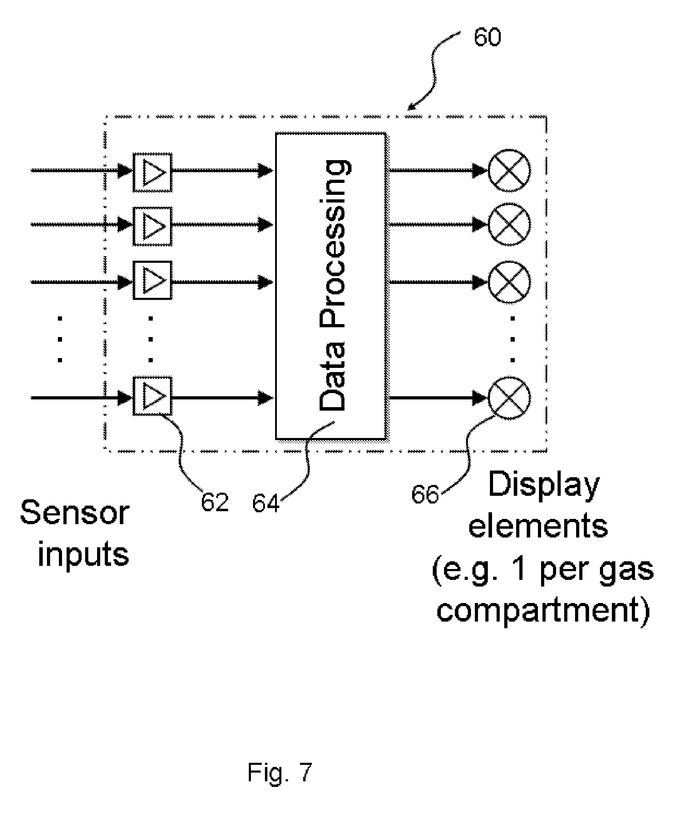

Fig. 7 shows an embodiment of an electronic detection and display unit 60. The electronic detection and display unit 60 is connected to the sensors at the gas-insulated conductor. The electronic detection and display unit comprises an amplifier or A/D converter 62 for the signal of the current sensor, and a data processing device 64 adapted for calculating the sum of the currents flowing in the gas-insulated conductor or the gas-insulated switchgear.

The data processing device is adapted to calculate the sum of the currents detected by the current sensors connected to the sensor inputs such that the respective sums of the currents in a gas-insulated conductor are calculated such that the resulting value is zero as long as Kirchhoff current law is fulfilled in the conductor at an error detection region. Thus, by the detection and display unit 60 a leakage current determining unit is provided.

In case of an arc discharge in the gas-insulated conductor, the sum of the respective currents is not zero anymore. Thus, in a typical embodiment, the data processing device is adapted to provide an alert signal, for example a display message or an audio message, if the sum of the selected currents is not zero or exceeds a predetermined threshold value. In a further embodiment, the data processing device is adapted to provide the alert signal until the alert signal is manually stopped. Thus by the detection and display unit 60 also a processing unit is provided.

In the embodiment shown in Fig. 7, the alert signal is provided by display elements 66. For example, one display element may be used for one gas compartment or for one error detection region. Typically, all current signals are fed into a central processing unit, which comprises the amplitudes of the individual current signal and flags in the compartment where a significant valuation of the Kirchhoff current law is detected, here by analogue or by digital signal processing.

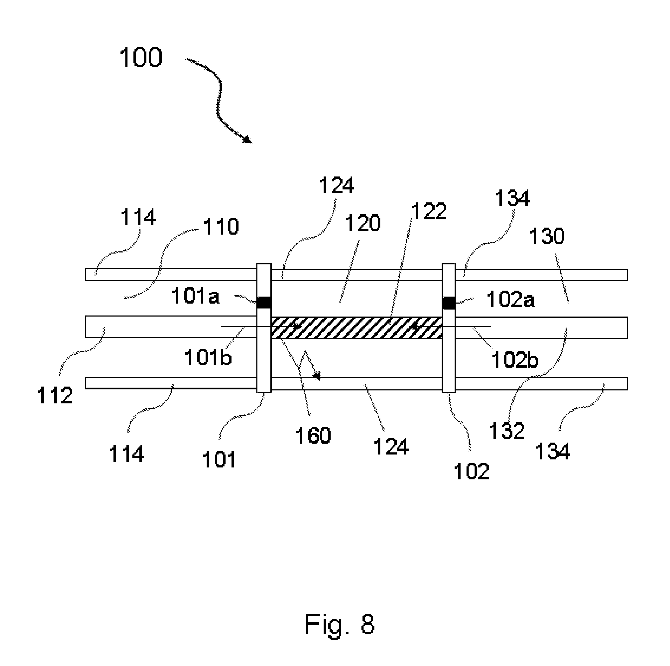

Fig. 8 shows an embodiment of a gas-insulated switchgear. The gas-insulated switchgear 100 comprises a first switchgear compartment 110, a second switchgear compartment 120 and a third switchgear compartment 130. Each switchgear compartment 110, 120, 130 comprises a ground enclosure 114, 124, 134 and a high-voltage conductor 112, 122, 132. The first switchgear compartment 110 is connected to the second switchgear compartment 120 by first joining portion 101, such that the current is adapted to flow from the high-voltage conductor 112 of the first switchgear compartment 110 to the high-voltage conductor 122 of the second switchgear compartment 120. Further, the enclosure 114 of the first switchgear compartment 110 is typically electrically connected to the enclosure 124 of the second switchgear compartment 120. The first joining portion 101 is in an embodiment a barrier insulator, such that the first switchgear compartment 110 is separated from the second switchgear compartment 120. That means, gas contained in the first switchgear compartment 110 is not allowed to move to the second switchgear compartment 120.

The second switchgear compartment 120 is connected to the third switchgear 130 compartment by a second joining portion 102. The second joining portion 102 is similar to the first joining portion 101. Thus, a current flowing in the high-voltage conductor is flowing for example from the high-voltage conductor 112 of the first switchgear compartment 110 via the high-voltage conductor 122 of the second switchgear compartment 120 to the high-voltage conductor 132 of the third switchgear compartment 130.

Further, the gas-insulated switchgear 100 comprises in the first joining portion 101 and in the second joining portion 102 a first current sensor 101a and a second current sensor 102a. The current sensors 101a, 102a are adapted to sense current flowing from the high-voltage conductor 112 of the first switchgear compartment 110 to the high-voltage conductor 122 of the second switchgear compartment 120, and a current flowing from the high-voltage conductor 132 of the third switchgear compartment 130 to the high-voltage conductor 122 of the second switchgear compartment 120, respectively. These currents measurement directions are shown in Fig. 8 as a first arrow 101b and a second arrow 102b.

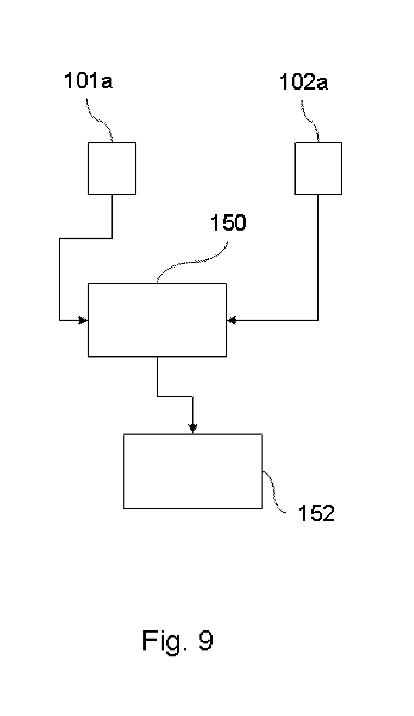

Fig. 9 shows an embodiment of a measurement device adapted for detecting an arc charge in the second compartment 120 of Fig. 8. The measurement device comprises the first current sensor 101a and a second current sensor 102a. The current sensors 101 a, 102a are operatively connected to a leakage current determining unit 150 for determining the sum of a first current and a second current in the joining portions 101, 102. The current sensors are connected to the leakage current determining unit 150, such that the sum of the first current and the second current is zero if the Kirchhoff current law is fulfilled. In other words, referring again to Fig. 8, the currents flowing in the high voltage conductor from the first switchgear compartment to the second switchgear compartment and from the third switchgear compartment to the second switchgear compartment must be zero, in case that no error has occurred. In Fig. 8 the second switchgear compartment 120 corresponds to an error detection region, wherein an arc discharge can be detected.

Referring back to Fig. 9, further, a processing unit 152 is shown connected operatively to the leakage current determining unit 150. The processing unit 152 is adapted to compare the sum of the first current and the second current 101b, 102b, with a predetermined threshold value. If the current sum determined by the leakage current determining unit 150 is below that predetermined threshold value, no alarm or alert signal is triggered. In case, that the sum calculated by the leakage current determining unit 150 exceeds that predetermined value, an alarm or alert signal is triggered, and, in an embodiment, it is also indicated, that the error has occurred in the second switchgear compartment 120.

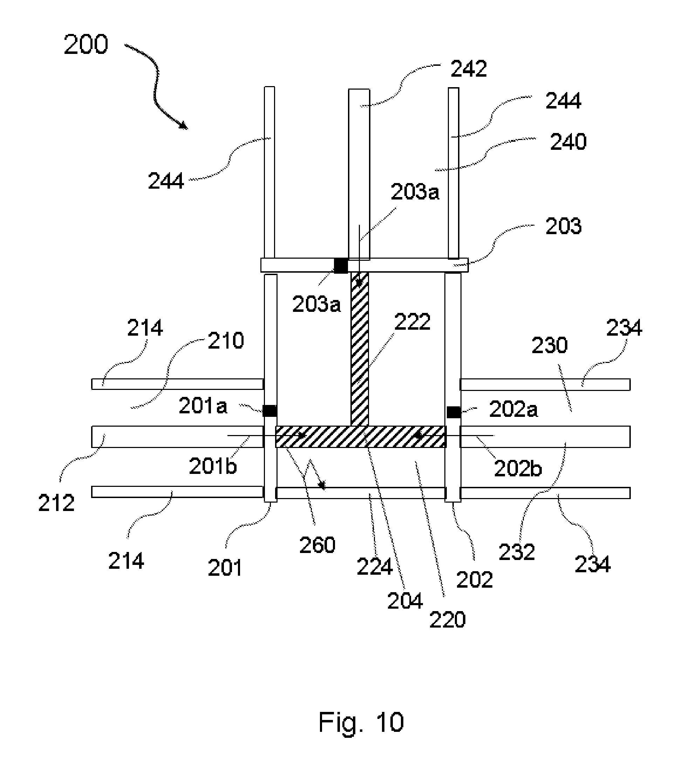

Fig. 10 shows a further embodiment of a gas insulated switchgear 200. The gas insulated switchgear comprises a first switchgear compartment 210, a second switchgear compartment 220, a third switchgear compartment 230 and a fourth switchgear compartment 240. Each of the switchgear compartments comprises a high-voltage conductor 212, 222, 232, 242, and a grounded enclosure 214, 224, 234, 244. The switchgear compartments are insulated with respect to each other by a first joining portion 201, between the first switchgear compartment 210 and the second switchgear compartment 220, a second joining portion 202 between the second switchgear compartment and the third switchgear compartment, and a third joining portion 203 between the second switchgear compartment and the fourth switchgear compartment. The gas insulated switchgear shown in Fig. 10 is a junction comprising three branches. In an embodiment a current is flowing from the high-voltage conductor 212 of the first switchgear compartment to the high-voltage conductors 232, 242 of the third and fourth switchgear compartment respectively.

The first, the second and the third joining portion 201, 202, 203 comprise a current sensor 201a, 202a, 203a, for measuring a current in the high-voltage conductor through the respective joining portion in direction of the second switchgear compartment where the high-voltage conductors of the three branches are joined. The joint 204 may be defined in an embodiment as a node in the sense of the Kirchhoff current law. Thus, in case if no error occurs in the second switchgear compartment 220, the sum of the currents measured in direction of the second switchgear compartment in the first, second and third joining section must be zero. The direction, in which the current sensors 201a, 202a, 203a are measuring the current are indicated with the arrows 201b, 202b, 203b. In the embodiment of Fig. 10, the error detection region is defined by the second switchgear chamber 220, as the current sensors 201a, 202a, 203a are arranged on the border to the adjacent switch-gear chambers.

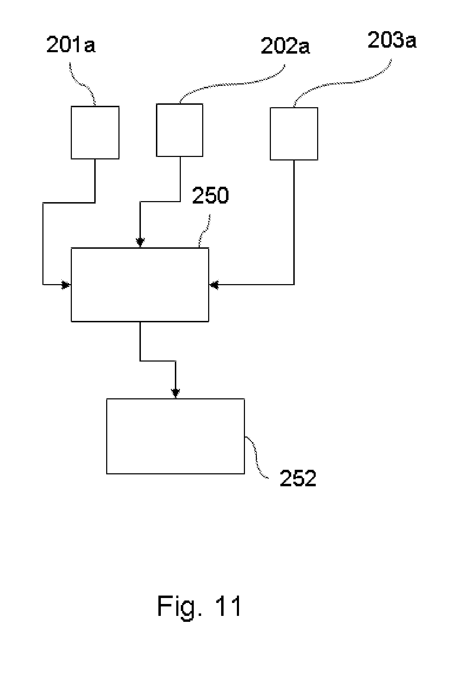

Fig. 11 shows an embodiment of a measurement device adapted for detecting an arc discharge in the second switchgear compartment of the gas-insulated switchgear of Fig. 10. The measurement device comprises or is connected to the current sensors 201a, 202a, 203a disposed in the first joining portion 201, the second joining portion 202 and the third joining portion 203. The current sensors 201a, 202a, 203a are connected to a leakage current determining unit 250 that is adapted to provide a sum of the currents sensed in the direction of the error detection region. In case of a normal operating gas-insulated switchgear, the sum that is calculated by the leakage current determining unit 250 is substantially zero. In case of an arc discharge 260 as shown in Fig. 10, the sum of the currents measured by the first current sensor 201a, the second current sensor 202a, and the third current sensor 203a is not zero. The result of the sum is provided from the leakage current determining unit 250 to a processing unit 252 that is operatively connected to the leakage current determining unit 250. The processing unit 252 is adapted to compare the sum provided by the leakage current determining unit 250 with a threshold value. In case that the current sum or leakage current is greater than predetermined threshold value, the processing unit 252 is adapted to provide an alert signal, that an arc discharge has occurred in the second switchgear compartment.

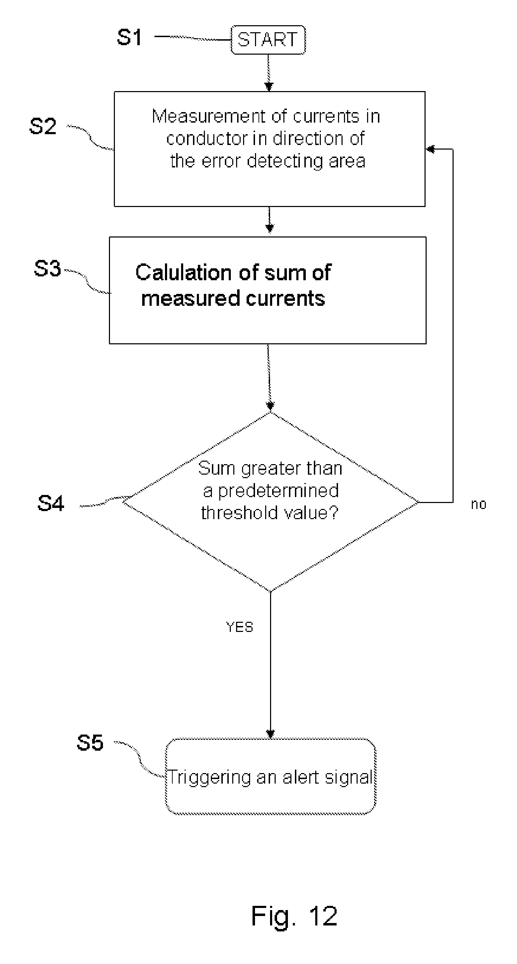

Fig. 12 shows an embodiment of a method for determining an arc discharge in a gas-insulated switchgear or a gas-insulated conductor. The method shown in Fig. 12 relates to only one error detection region, which may be a compartment of a gas-insulated switchgear or a gas-insulated conductor. The method starts in step S1. In step S2, the currents in the high-voltage conductor flowing towards an error detection region are measured. In step S3, a leakage current is determined by calculating the sum of measured currents.. In step S4 the determined leakage current (sum of measured currents) is compared with a predetermined threshold value. If the determined leakage current is below the predetermined value, no action is performed and the next measurement is performed in step S2. In case the determined leakage current exceeds the predetermined value an alert signal is triggered in step S5.

The method explained in Fig. 12 refers to a measurement of only one error detection region. Of course, a measurement device may be adapted to perform above method for multiple error detection regions in parallel. Thus, the location of an error detection region may be quickly determined, such that the repair of the gas-insulated switchgear or the gas-insulated conductor at the location where the arc discharge has occurred can be quickly performed.

The invention has been described on the basis of embodiments which are shown in the appended drawings and from which further advantages and modifications emerge. However, the disclosure is not restricted to the embodiments described in concrete terms, but rather can be modified and varied in a suitable manner. It lies within the scope to combine individual features and combinations of features of one embodiment with features and combinations of features of another embodiment in a suitable manner in order to arrive at further embodiments.

It will be apparent to those skilled in the art, based upon the teachings herein, that changes and modifications may be made without departing from the disclosure and its broader aspects. That is, all examples set forth herein above are intended to be exemplary and nonlimiting.

## Claims

1. A measurement device adapted for detecting an arc discharge (10, 160, 260) in at least one error detection region (3b, 120, 220) of an insulated conductor arrangement (1, 100, 200), the insulated conductor arrangement (1, 100, 200) having a conductor (7, 112, 122, 132, 212, 222, 232, 242) surrounded by an insulating medium and a conducting enclosure (9, 114, 124, 134, 214, 224, 234, 244), the insulating medium being disposed between the conductor (7, 114, 124, 134, 224, 234, 244) and the enclosure (9, 114, 124, 134, 214, 224, 234, 244),
wherein the error detection region is delimited by at least two conductor sections of the conductor;
the measurement device comprises at least one leakage current determining unit (41, 42, 50, 64, 150, 250) adapted for determining a leakage current in the at least one error detection region; and
a processing unit (42, 43, 50, 53, 55, 64, 66, 152, 252) operatively connected to the leakage current determining unit and adapted for determining an arc discharge within the insulated conductor arrangement (1, 100, 200) on the basis of the determined leakage current.

2. The measurement device of claim 1, wherein
the insulating medium is a gas and the insulated conductor arrangement is a gas-insulated conductor (1, 100, 200), or
wherein the insulating medium is an insulating layer disposed between the conductor and the enclosure, or
wherein the insulating medium is a vacuum.

3. The measurement device of claim 1 or 2, wherein the leakage current determining unit is adapted to be operatively connected to at least two current sensors (20, 22, 30, 30', 101a, 102a, 201a, 202a, 203a) for measuring the currents flowing through the at least two conductor sections, and is further adapted for comparing the currents flowing into and out of the error detection region.

4. The measurement device of claim 3, wherein at least one of the current sensors (30, 30') is a coil (32, 32') with at least one winding, in particular with an iron core.

5. The measurement device of one of the claims 1 to 4, wherein the insulated conductor arrangement has at least one gas, air, oil or vacuum compartment (3a, 3b, 110, 120, 130, 210, 220, 230), the gas, air, oil or vacuum compartment being formed by the conductor, the enclosure, and in direction of the conductor by at least one barrier insulator (5a, 5b, 5c, 101, 102, 201, 202, 203).

6. The measurement device of claim 5, wherein at least one current sensor, in particular two current sensors, is or are disposed in or adjacent to the barrier insulator.

7. The measurement device of one of the claims 1 to 6, wherein at least one error detection region (3b, 120, 220) corresponds substantially to a gas, air , oil or vacuum compartment.

8. The measurement device of one of the claims 1 to 7, wherein the insulated conductor arrangement comprises a plurality of gas, air, oil or vacuum compartments and a plurality of error detection regions, wherein the error detection regions correspond substantially to the gas, air, oil or vacuum compartments.

9. The measurement device of one of the claims 1 to 8, wherein the insulated conductor arrangement comprises a plurality of error detection regions, wherein the processing unit is adapted for determining in which error detection region the arc discharge has been occurred.

10. The measurement device of one of the claims 1 to 9, wherein the leakage current determining unit is adapted to calculate the sum of the currents in the conductor sections measured in direction of the error detection region or to calculate the sum of the currents in the conductor sections measured in direction away from the error detection region.

11. The measurement device of one of the claims 3 to 10, wherein the leakage current determining unit comprises a solenoid including a coil for each current sensor, wherein the coils are connected to the current sensors, such that the resulting magnetic field is proportional to the leakage current.

12. The measurement device of one of the claims 1 to 11, wherein the processing unit is adapted to compare the leakage current determined by the leakage current determining unit with a predetermined value, and in particular to provide an alert signal if the current sum exceeds the predetermined threshold value.

13. Measurement device according to one of the claims 1 to 12, wherein the insulated conductor arrangement is a gas-insulated switchgear (100, 200).

14. An insulated conductor arrangement (1, 100, 200) with a measurement device according to one of the claims 1 to 13.

15. A method for detecting an arc discharge (10, 160, 260) in at least one error detection region (3b, 120, 220) of an insulated conductor arrangement (1, 100, 200), the insulated conductor arrangement having a conductor (7, 112, 122, 132, 212, 222, 232, 242) surrounded by an insulating medium and a conducting enclosure (9, 114, 124, 134, 214, 224, 234, 244), the error detection region being delimited by at least two conductor sections of the conductor; the method comprises:
a) determining a leakage current in the at least one error detection region; and
b) determining an arc discharge within the insulated conductor arrangement on the basis of the determined leakage current.

16. The method of claim 15, wherein step a) comprises
a1) measuring the currents flowing through the at least two conductor sections, and
a2) comparing the currents flowing into and out of the error detection region.
